# FASCICULE DE BREVET EUROPEEN

(11) **EP 2 035 904 B1**
(45) Date de publication et mention de la délivrance du brevet: **25.11.2009**
(21) Numéro de dépôt: 07729971.7
(22) Date de dépôt: 06.06.2007
(51) Int. Cl.: G05D 3/10, F16M 11/12

(54) **DISPOSITIF DE POSITIONNEMENT D'UN OBJET DANS TOUTES LES DIRECTIONS**
EINRICHTUNG ZUM POSITIONIEREN EINES OBJEKTS IN ALLEN RICHTUNGEN
DEVICE FOR POSITIONING AN OBJECT IN ALL DIRECTIONS

(30) Priorité: 23.06.2006 EP 06116000
(43) Date de publication de la demande: 18.03.2009
(73) Titulaire: The Swatch Group Research and Development Ltd., 2074 Marin (CH)
(72) Inventeur: GRANGE, Matthieu, 1022 Chavannes (CH); CASAGRANDE, Arnaud, 2014 Bôle (CH)
(74) Mandataire: Ravenel, Thierry Gérard Louis
(86) Numéro de dépôt international: PCT/EP2007/055604
(87) Numéro de publication internationale: WO 2007/147737

(56) Documents cités:
- GB-A- 1 188 578
- US-A1- 3 441 936

## Description

L'invention concerne un dispositif de positionnement d'un objet dans toutes les directions. L'objet est configuré de manière à présenter au moins une portion en forme de calotte sphérique pour être placée sur le dispositif de positionnement. L'objet avec sa calotte sphérique est maintenu par gravité sur trois points d'appui du dispositif de positionnement. Le dispositif de positionnement comprend des moyens pour entraîner notamment en rotation l'objet, dont le centre de gravité dans toute position ou orientation se trouve à l'intérieur du triangle constitué par les trois points d'appui.

Il est connu d'utiliser des dispositifs de positionnement notamment pour des systèmes de mesure du diagramme de rayonnement d'une antenne d'émission. De tels dispositifs de positionnement peuvent orienter par exemple l'antenne d'émission dans toutes les directions par rapport à une antenne fixe de réception à caractéristiques bien connues d'un dispositif de réception. Ce dispositif de réception relié à une station de traitement de données est susceptible de capter le champ électromagnétique produit par l'antenne d'émission à une certaine distance dans toutes les positions ou orientations de ladite antenne. De cette manière, la station de traitement peut déterminer le diagramme de rayonnement de l'antenne d'émission pour la caractériser.

L'antenne d'émission à mesurer peut être placée dans un élément de forme sphérique afin que l'élément sphérique puisse être maintenu par gravité par exemple sur trois points d'appui d'un dispositif de positionnement. Un tel dispositif de positionnement de l'art antérieur comprend trois roues motrices dont le contact de chaque roue sur la surface extérieure de l'élément sphérique constitue un des trois points d'appui. Ces roues motrices peuvent être des pneus de petite taille, qui sont mis en mouvement chacun par des moyens d'entraînement, tels que des moteurs ou turbines à air comprimé. Par l'entraînement desdites roues, l'élément sphérique en contact des roues peut tourner aléatoirement dans les trois directions.

Avec l'emploi des trois roues motrices, ce dispositif de positionnement de l'art antérieur comporte certains inconvénients. En effet, lorsque les trois roues motrices tournent, le mouvement, qu'elles communiquent à l'élément sphérique, implique un mouvement tangentiel aux points d'appui, c'est-à-dire aux trois points de contact. Ce mouvement est la résultante des trois forces de frottement des roues. Autrement dit, les roues dérapent la plupart du temps sur la surface extérieure de l'élément sphérique en mouvement. Ceci a pour effet d'animer l'élément sphérique selon un horaire chaotique.

Les divers frottements agissent sur la surface extérieure de l'élément sphérique comme des gommes qui salissent la surface extérieure de l'élément sphérique. Comme dans certains cas le mouvement tangentiel de la sphère est exactement orthogonal à l'orientation d'une des roues, cela a pour conséquence de faire sautiller l'élément sphérique autour de son origine. Cette déviation momentanée du centre de la sphère entraîne une erreur sur une position ou orientation mesurée de l'antenne d'émission, ce qui constitue un inconvénient. De plus au cours des divers sauts, l'élément sphérique, qui peut être mal équilibré, présente une tendance marquée à retomber selon son centre de masse. Ceci se traduit par une mauvaise homogénéité des positions parcourues.

Le document de brevet US 3,441,936 présente un dispositif de positionnement d'un élément sphérique à l'intérieur duquel peut être placé une antenne d'émission. Cet élément sphérique est maintenu par gravité sur trois roues d'entraînement du dispositif de positionnement susceptibles d'orienter dans toutes les directions l'antenne d'émission. Lorsqu'une roue d'entraînement est entraînée pour bouger l'élément sphérique, l'élément sphérique dérape ou sautille sur les deux autres roues d'entraînement. Ceci ne permet pas de garantir un bon positionnement de l'élément sphérique sur le dispositif de positionnement ce qui constitue un inconvénient.

Dans le document de brevet GB 1,188,578, il est décrit également un dispositif de positionnement pour un élément en partie sous forme sphérique. L'élément sphérique est disposé sur un support, qui comprend des billes placées en rotation dans un logement respectif du support. Cependant, le frottement des billes dans leur logement peut être important. Cela peut ainsi conduire à un mauvais positionnement de l'élément sphérique sur son support, ce qui est un inconvénient.

L'invention a donc pour objet de fournir un dispositif de positionnement d'un objet dans toutes les directions afin de pallier les inconvénients de l'état de la technique cités ci-dessus.

A cet effet, l'invention concerne un dispositif de positionnement d'un objet dans toutes les directions cité ci-devant qui comprend les caractéristiques définies dans la revendication indépendante 1.

Des formes spécifiques d'exécution du dispositif de positionnement sont définies dans des revendications dépendantes 2 à 6.

Un avantage du dispositif de positionnement selon l'invention est qu'un seul organe d'entraînement est utilisé pour entraîner en rotation l'objet placé sur les trois points d'appui. Cet organe d'entraînement est susceptible selon son orientation d'entraîner l'objet, qui peut être de préférence un élément sphérique, dans n'importe quelle direction aléatoirement.

Avantageusement, l'organe d'entraînement comprend une roue en contact de la surface extérieure l'élément sphérique, et un support de cette roue d'entraînement. L'axe de rotation de la roue est monté à l'extrémité du support, qui est susceptible de tourner selon un autre axe passant par le point de contact de la roue sur la surface extérieure l'élément sphérique et le centre de l'élément sphérique. La roue peut être configurée comme une poulie dans une rainure circulaire de laquelle est placé en anneau en caoutchouc pour venir en contact de la surface extérieure de l'élément sphérique. Le support monté rotatif sur une structure mécanique du dispositif de positionnement, et la roue d'entraînement peuvent être entraînés en rotation par l'intermédiaire de moyens à air comprimé, tels que des moteurs ou turbines à air comprimé.

Les buts, avantages et caractéristiques du dispositif de positionnement d'un objet dans toutes les directions apparaîtront mieux dans la description suivante en regard des dessins sur lesquels :
- la figure 1 représente une partie du dispositif de positionnement selon l'invention partiellement en coupe sur lequel est placé un objet de forme sphérique,
- la figure 2 représente un objet de forme sphérique avec l'endroit des points d'appui du dispositif de positionnement selon l'invention,
- les figures 3a et 3b représentent une vue en coupe partielle dans le sens de la longueur et une vue de dessus d'une rotule à bille du dispositif de positionnement selon l'invention,
- la figure 4 représente de manière simplifiée les différents éléments, qui composent un système de mesure du diagramme de rayonnement d'une antenne d'émission, qui comprend un dispositif de positionnement selon l'invention.

Dans la description suivante, tous les éléments du dispositif de positionnement qui sont bien connus de l'homme du métier dans ce domaine technique ne sont relatés que de manière simplifiée. L'objet placé sur le dispositif de positionnement peut être une lampe, un haut-parleur, un indicateur, un objet d'art ou décoratif, un support pour un dispositif électronique, ou tout autre objet. Cet objet comprend au moins une portion sous la forme de calotte sphérique susceptible d'être placée et maintenue sur le dispositif de positionnement.

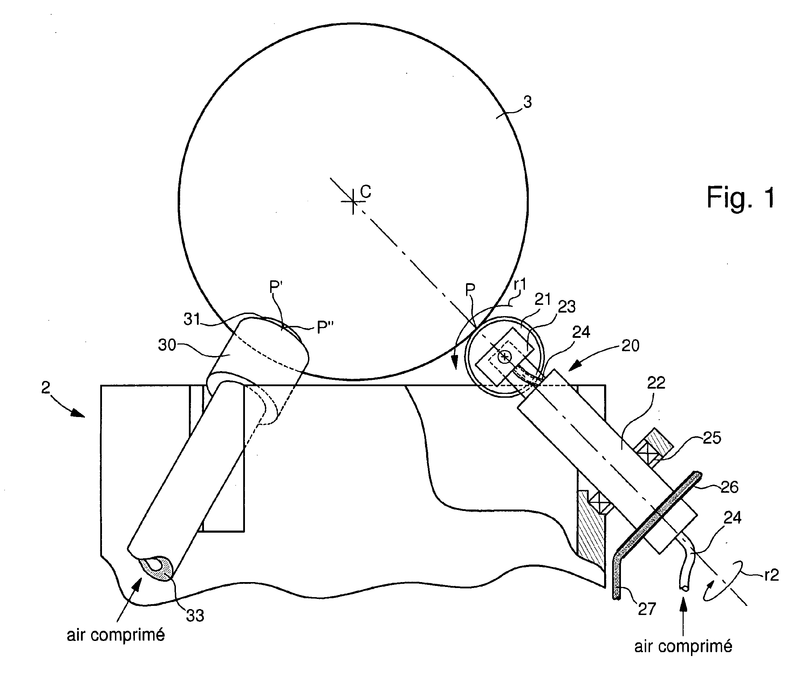

La figure 1 représente les principaux éléments du dispositif de positionnement 2 sur lequel peut être placé sur trois points d'appui P, P', P" un objet à calotte sphérique 3, qui est de préférence un élément sphérique creux servant de support pour un dispositif électronique.

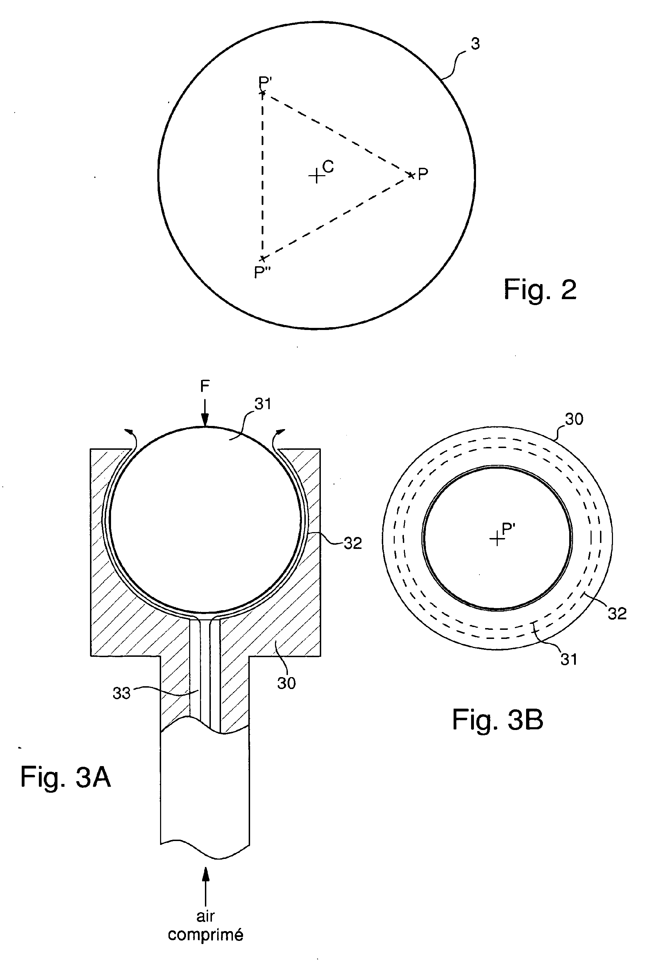

Ce dispositif de positionnement 2 comprend montés sur une structure mécanique un organe d'entraînement 20 en contact avec la surface extérieure de l'élément sphérique, pour constituer un premier point d'appui P, et deux rotules à bille 30, dont une seule est visible sur la figure 1. Ces rotules à bille sont expliquées ci-après en référence aux figures 3a et 3b. La bille 31 de chaque rotule à bille vient en contact de la surface extérieure de l'élément sphérique pour constituer les deux autres points d'appui P', P" du dispositif de positionnement. Cet organe d'entraînement est configuré de telle manière à pouvoir faire tourner aléatoirement dans toutes les directions l'élément sphérique 3 sur le dispositif de positionnement.

Les trois points d'appui P, P', P" comme montré à la figure 2 peuvent être espacés régulièrement pour former les extrémités d'un triangle, par exemple un triangle équilatéral disposé de préférence horizontalement. Bien entendu, le centre de gravité de l'élément sphérique 3 doit se trouver dans toute position à l'intérieur de ce triangle équilatéral pour être maintenu sur le dispositif de positionnement. L'espace entre chaque point d'appui doit être de préférence supérieur au rayon de l'élément sphérique et inférieur à 1.5 fois le rayon dudit élément sphérique.

L'organe d'entraînement 20 est constitué d'une roue 21 qui vient en contact de la surface extérieure de l'élément sphérique pour l'entraîner en rotation. La roue peut comprendre un élément sous forme d'anneau en caoutchouc disposé dans une rainure circulaire d'une poulie pour permettre d'entraîner l'élément sphérique sans glisser. L'axe de rotation r1 de cette roue 21 est monté à l'extrémité d'un support 22 ou tige. Ce support 22 est susceptible de tourner selon un autre axe de rotation r2 passant par le point de contact P de la roue sur la surface extérieure de l'élément sphérique et le centre C dudit élément. Le support est maintenu dans la structure mécanique du dispositif de positionnement par l'intermédiaire par exemple d'un roulement à bille 25 pour lui permettre de tourner selon son axe de rotation. Ceci permet ainsi d'imposer une rotation aléatoire de l'élément sphérique par l'intermédiaire de la roue 21 dans toutes les directions.

En lieu et place de trois roues d'entraînement d'un dispositif de l'art antérieur, qui constituaient les trois points d'appui de l'élément sphérique, une seule roue d'entraînement 21 ne dérape plus en contact de la surface extérieure de l'élément sphérique. Ceci permet à l'élément sphérique 3 de décrire aléatoirement avec beaucoup d'homogénéité l'ensemble de l'espace des positions. Cette roue d'entraînement est de préférence entraînée par un moteur 23 ou turbine à air comprimé, qui peut être disposé directement sur l'axe de rotation de la roue et maintenu fixement à l'extrémité du support 22. Bien entendu, ce moteur 23 peut aussi être logé dans le support à proximité de ladite roue 21 et relié à l'axe de rotation de la roue par un ensemble d'engrenages. Cet ensemble d'engrenage peut permettre d'opérer une démultiplication de la vitesse de rotation du moteur pneumatique 23. Au moins un conduit ou tuyau flexible 24 pour véhiculer l'air comprimé relie le moteur à air comprimé 23 à un réservoir à air comprimé non représenté.

Un autre moteur ou turbine à air comprimé peut être utilisé pour entraîner en rotation le support 22 de la roue d'entraînement 21. Dans ce cas, le support 22 comprend une poulie 26 à l'extrémité opposée de la roue d'entraînement 21. Une courroie 27 relie ladite poulie 26 à au moins une autre poulie non représentée, qui est entraînée par l'autre moteur ou turbine, ou un autre ensemble d'engrenages. Par cet agencement, le support 22 peut être entraîné en rotation pour faire tourner l'axe de rotation de la roue d'entraînement 21. Avec cette seule roue d'entraînement, les sautillements de l'élément sphérique sur les trois points d'appui ont disparu. Le seul déplacement du centre de l'élément sphérique observable réside de son mal rond naturel et du jeu des poulies de l'ordre du millimètre.

Les figures 3a et 3b représentent une des rotules à bille 30 du dispositif de positionnement pour servir d'un des points d'appui de l'élément sphérique. Cette rotule 30, qui peut être de forme extérieure généralement cylindrique, comprend un logement 32 pour la bille en matière synthétique. Ce logement est dimensionné de telle manière que la bille est libre de rotation à l'intérieur de ce logement. Ce logement peut être de forme sphérique ou de forme cylindrique. De préférence, la rotule est réalisée en un matériau non conducteur et à faible coefficient de frottement, tel qu'en Téflon, pour la bille libre de rotation.

Une portion de la bille 31 débouche hors du logement 32 par une ouverture supérieure de la rotule 30 pour venir en contact de la surface extérieure de l'élément sphérique. Une force F représentant une partie du poids de l'élément sphérique est appliquée au point d'appui P' sur la bille. Cette ouverture est de diamètre inférieur au diamètre de la bille pour maintenir la bille à l'intérieur du logement 32.

Pour un logement de forme sphérique, la rotule 30 comprend deux parties s'emboîtant l'une sur l'autre dans le sens de la longueur pour enfermer la bille 31 dans le logement 32. Dans le cas d'un logement de forme cylindrique par contre, l'ouverture supérieure est réalisée dans un couvercle, non représenté, fermant partiellement le logement. La rotule est configurée également sous la forme d'une buse pour amener de l'air comprimé par un conduit 33 de la rotule jusque dans le logement 32 de la bille. De cette façon, la bille est maintenue dans son logement sur un coussin d'air.

Dans le cas où l'élément sphérique 3 est posé uniquement sur deux buses d'air comprimé, dont le débit est réglé, alors que le troisième point d'appui est la roue d'entraînement, il est facile de faire flotter et tourner l'élément sphérique. Toutefois, l'élément sphérique est dans certains cas animé d'un mouvement oscillant. Il se rapproche d'une buse, ce qui augmente la pression d'air et l'éjecte quelque peu. Dans le cas où la pression locale, donc la force de soutien, diminue, l'élément sphérique retombe sur la buse qui l'éjecte à nouveau. De ce fait avec ces buses d'air comprimé, cela nécessite un réglage de la pression d'air en fonction du poids de la sphère, ce qui est résolu par les rotules à bille selon l'invention. Un filet d'air comprimé sort de l'ouverture du logement autour de la bille, dont la pression est fonction du poids de l'élément sphérique, ce qui évite le problème de simples buses à air comprimé. L'élément sphérique peut librement être entraîné en rotation sans à-coup dans toutes les directions.

Pour résoudre un éventuel problème lié au déséquilibrage de l'élément sphérique sur les trois points d'appui, il peut être prévu d'augmenter le poids de l'élément sphérique en introduisant une rotule supplémentaire à son sommet ou rotule de pression. Cette rotule peut être réalisée à l'aide d'une bille coulissant dans un tuyau d'air comprimé et permettant de générer à l'image d'un ressort une force constante sur l'élément sphérique. La résultante de cette pression normale au contact de la roue motrice d'entraînement permet une meilleure adhérence de ladite roue.

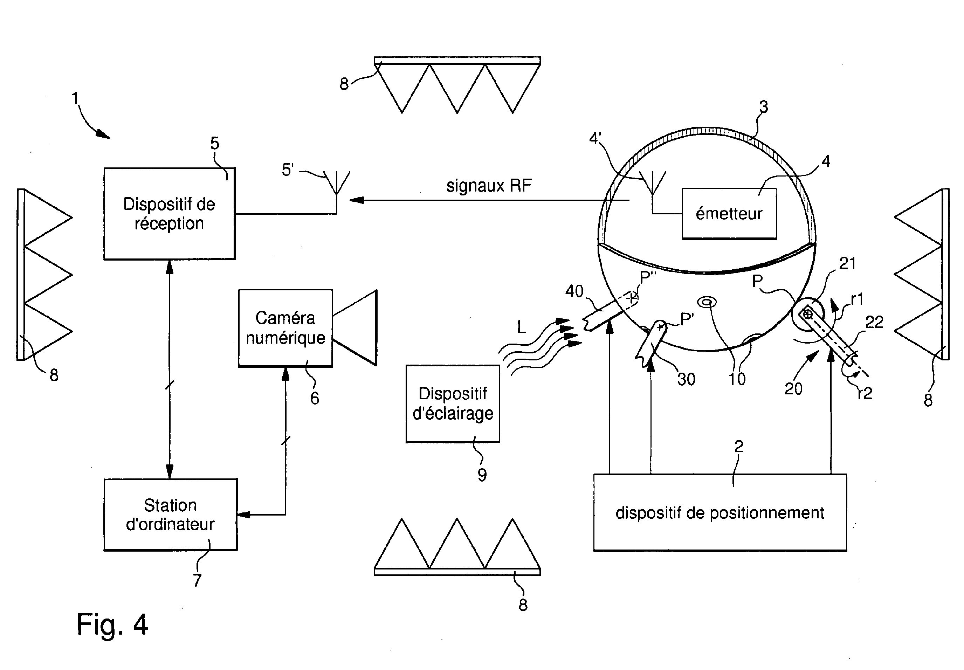

La figure 4 illustre de manière schématique tous les éléments d'un système de mesure 1 du diagramme de rayonnement d'une antenne d'émission 4' d'un dispositif électronique émetteur 4, qui comprend le dispositif de positionnement 2 selon l'invention. Le dispositif de positionnement 2 n'est représenté par simplification sur cette figure 4 que par les membres 20, 30, 40 supportant par gravité un objet, tel qu'un élément sphérique 3. L'organe d'entraînement 20 permet de faire tourner l'élément sphérique aléatoirement dans toutes les directions.

Le dispositif électronique 4 avec son antenne d'émission 4' est logé et maintenu fixement à l'intérieur de l'élément sphérique 3, qui comprend deux parties, qui s'emboîtent par tout moyen connu l'une sur l'autre pour enfermer le dispositif électronique. L'antenne d'émission 4' est positionnée de préférence voisine du centre de cette sphère creuse pour les opérations de mesure du champ électromagnétique produit par l'antenne d'émission du système de mesure.

Le système de mesure comprend encore un dispositif de réception 5 muni d'au moins une antenne de réception fixe 5' pour capter le champ électromagnétique de l'antenne d'émission 4' (signaux RF), des moyens de détection 6 de la position ou orientation de l'élément sphérique en mouvement sur le dispositif de positionnement 2. Les signaux relatifs au champ électromagnétique captés par l'antenne de réception et des signaux de position fournis par les moyens de détection sont transmis automatiquement ou sur requête à une station de traitement des données, qui est de préférence une station d'ordinateur 7. Le dispositif de réception 5 et les moyens de détection, qui sont formés par une caméra numérique 6, peuvent être alimentés en énergie électrique indépendamment de la station d'ordinateur ou par l'intermédiaire de ladite station d'ordinateur.

La majeure partie des composants du système de mesure 1 est placée à l'intérieur d'une chambre anéchoïque illustrée par les éléments référencés 8. Ceci permet d'éviter toute réflexion du champ électromagnétique produit par l'antenne d'émission 4' contre des obstacles susceptibles de nuire à la mesure du rayonnement de l'antenne d'émission. De plus, aucune partie du dispositif de positionnement 2 à proximité de l'antenne d'émission, c'est-à-dire à l'intérieur de ladite chambre, ne doit être composée de matériau métallique pour ne pas perturber la mesure du champ électromagnétique produit par l'antenne d'émission. Les moyens d'entraînement du dispositif de positionnement 2, qui sont en plastique ou en matériau non conducteur, fonctionnent donc par l'intermédiaire d'air comprimé. Ces moyens d'entraînement comprennent des moteurs ou turbines à air comprimé reliés par des tuyaux à robinets à un réservoir d'air comprimé. Ces moteurs non métalliques pour l'entraînement de la roue et du support de roue selon deux axes peuvent être placés donc à proximité de l'antenne d'émission.

De manière à déterminer précisément la position ou orientation de l'élément sphérique 3, donc de l'antenne d'émission 4' à mesurer qu'il comprend, il peut être prévu de placer des figures ou références spécifiques 10 sur la surface extérieure de l'élément sphérique 3. Ces figures ou références sont constituées par des codes à barres circulaires, chaque code à barres circulaires définissant une position précise de l'élément sphérique 3 sur le dispositif de positionnement 2. Chaque code à barres circulaires 10 peut être imprimé ou collé sur la surface extérieure de la sphère ou réalisé par tout autre moyen.

Il est prévu par exemple 14 codes à barres circulaires différents, qui sont répartis uniformément sur la surface extérieure de l'élément sphérique. Chaque code à barres circulaires étant codé sur 4 bits, ainsi qu'un bit de délimitation extérieure de couleur différente de la couleur de la surface extérieure de l'élément sphérique. De préférence, la surface extérieure de l'élément sphérique est de couleur claire, par exemple de couleur blanche, alors qu'au moins le bit supplémentaire de délimitation extérieure est de couleur foncée, par exemple de couleur noire.

Pour améliorer la prise d'images par la caméra numérique, qui doit être en mesure de prendre par exemple 15 images par seconde, le système de mesure 1 comprend encore un dispositif d'éclairage isotrope 9. Ce dispositif d'éclairage 9 est configuré de telle manière à fournir des faisceaux de lumière L en direction d'au moins une moitié de la surface extérieure de l'élément sphérique 3 du côté de la caméra numérique 6. Ce dispositif d'éclairage peut être constitué par un ensemble de fibres optiques guidant de la lumière provenant d'une source de lumière externe à la chambre anéchoïque vers la surface de l'élément sphérique visible par la caméra numérique.

A partir de la description qui vient d'être faite de multiples variantes de réalisation du dispositif de positionnement d'un objet dans toutes les directions peuvent être conçues par l'homme du métier sans sortir du cadre de l'invention définie par les revendications.

## Revendications

1. Dispositif de positionnement (2) d'un objet (3) dans toutes les directions, l'objet étant configuré de manière à présenter au moins une portion en forme de calotte sphérique placée et maintenue par gravité sur trois points d'appui (P, P', P") du dispositif de positionnement (2), le dispositif de positionnement comprenant des moyens pour entraîner notamment en rotation l'objet, dont le centre de gravité dans toute position ou orientation se trouve à l'intérieur du triangle constitué par les trois points d'appui, les moyens d'entraînement comprenant un organe d'entraînement (20, 21, 22), tel qu'une roue, dont le contact avec la surface extérieure de la calotte sphérique de l'objet constitue un des points d'appui du dispositif de positionnement, l'organe étant configuré pour faire tourner l'objet dans toutes les directions sur le dispositif de positionnement, **caractérisé en ce que** les deux autres points d'appui du dispositif de positionnement sont constitués chacun par une rotule à bille (30, 40), dont la bille (31) est placée libre de rotation dans un logement (32) d'extrémité de la rotule pour qu'une portion de la bille débouche par une ouverture du logement pour venir en contact de la surface extérieure de l'élément sphérique (3), ladite portion de la rotule logeant la bille étant une buse pour amener de l'air comprimé afin que la bille soit maintenue dans son logement sur un coussin d'air.

2. Dispositif de positionnement (2) selon la revendication 1, **caractérisé en ce que** l'organe d'entraînement (20) est une roue (21) venant en contact de la surface extérieure de la calotte sphérique de l'objet pour l'entraîner en rotation, l'axe de rotation de la roue est monté à l'extrémité d'un support (22) susceptible de tourner selon un autre axe passant par le point de contact de la roue sur la surface extérieure de l'objet et le centre de la sphère définie par la portion en forme de calotte sphérique de l'objet, de manière à imposer une rotation à l'objet par l'intermédiaire de la roue dans toutes les directions.

3. Dispositif de positionnement (2) selon la revendication 2, **caractérisé en ce que** la roue prend la forme d'une poulie ayant un anneau en caoutchouc dans une rainure circulaire de la poulie.

4. Dispositif de positionnement (2) selon la revendication 2, **caractérisé en ce qu'**un moteur pneumatique (23) est monté sur le support à proximité de la roue de l'organe d'entraînement pour entraîner en rotation ladite roue autour de son axe de rotation.

5. Dispositif de positionnement (2) selon la revendication 1, pour lequel l'objet est un élément sphérique (3) disposé sur les trois points d'appui (P, P', P"), **caractérisé en ce qu'**une rotule de pression supplémentaire est prévue au-dessus et en contact de l'élément sphérique pour augmenter le poids de l'élément sphérique sur les trois points d'appui.

6. Dispositif de positionnement (2) selon la revendication 5, **caractérisé en ce que** la rotule de pression supplémentaire comprend une bille coulissant dans un tuyau d'air comprimé pour générer une force constante sur l'élément sphérique.

## Claims

1. Device (2) for positioning an object (3) in all directions, the object being configured to have at least one portion in the shape of a spherical dome, which is placed and held by gravity on three points of support (P, P', P") of the positioning device (2), the positioning device including means for driving the object in rotation, wherein the centre of gravity of the object in any position or orientation is within the triangle formed by the three points of support, the drive means including a drive member (20, 21, 22), such as a wheel, whose contact with the external surface of the spherical dome forms one of the points of support of the positioning device, the member being configured to drive the object in all directions on the positioning device, **characterized in that** the two other points of support of the positioning device are each formed by a ball and socket joint (30, 40), wherein the ball (31) is placed to rotate freely in an end housing (32) of the ball and socket joint, so that one portion of the ball emerges through an aperture in the housing to come into contact with the external surface of the spherical element (3), said portion of socket joint housing the ball being a nozzle for bringing compressed air, so that the ball is held in the housing on an air cushion.

2. Positioning device (2) according to claim 1, **characterized in that** the drive member (20) is a wheel (21) that comes into contact with the external surface of the spherical dome to drive said dome in rotation, the rotating axle of the wheel is mounted at the end of a support (22) that can rotate along another axle, which passes through the point of contact of the wheel on the external surface of the object and the centre of the sphere, defined by the spherical domed shaped portion of the object so as to impose a rotation on the object via the wheel, in every direction.

3. Positioning device (2) according to claim 2, **characterized in that** the wheel takes the form of a pulley that has a rubber ring in a circular groove of the pulley.

4. Positioning device (2) according to claim 2, **characterized in that** a pneumatic motor (23) is mounted on the support in proximity to the wheel of the drive member to drive said wheel in rotation about the rotating axle thereof.

5. Positioning device (2) according to claim 1, wherein the object is a spherical element (3), arranged on the three points of support (P, P', P"), **characterized in that** that an additional pressure ball and socket joint is provided above and in contact with the spherical element to increase the weight of the spherical element on the three points of support.

6. Positioning device (2) according to claim 5, **characterized in that** the additional pressure ball and socket joint includes a ball that slides into a compressed air pipe to generate a constant force on the spherical element.

## Patentansprüche

1. Vorrichtung (2) zum Positionieren eines Objekts (3) in allen Richtungen, wobei das Objekt in der Weise konfiguriert ist, dass es wenigstens einen Abschnitt in Form einer sphärischen Haube aufweist, die durch die Schwerkraft auf drei Abstützpunkten (P, P', P") der Positionierungsvorrichtung (2) angeordnet und gehalten wird, wobei die Positionierungsvorrichtung Mittel umfasst, um das Objekt, dessen Schwerpunkt sich in jeder Position oder Orientierung innerhalb eines durch die drei Abstützpunkte gebildeten Dreiecks befindet, insbesondere rotatorisch anzutreiben, wobei die Antriebsmittel ein Antriebsorgan (20, 21, 22) wie etwa ein Rad umfassen, dessen Kontakt mit der äußeren Oberfläche der sphärischen Haube des Objekts einen der Abstützpunkte der Positionierungsvorrichtung bildet, wobei das Organ konfiguriert ist, um das Objekt in allen Richtungen auf der Positionierungsvorrichtung zu drehen, **dadurch gekennzeichnet, dass** die zwei anderen Abstützpunkte der Positionierungsvorrichtung jeweils durch ein Kugellager (30, 40) gebildet sind, dessen Kugel (31) frei drehbar in einem Endaufnahmesitz (32) des Lagers so angeordnet ist, dass ein Teil der Kugel durch eine Öffnung des Aufnahmesitzes freiliegt, um mit der äußeren Oberfläche des sphärischen Elements (3) in Kontakt zu gelangen, wobei der Abschnitt des Lagers, der die Kugel aufnimmt, eine Düse ist, um Druckluft zuzuführen, damit die Kugel in ihrem Aufnahmesitz auf einem Luftkissen gehalten wird.

2. Positionierungsvorrichtung (2) nach Anspruch 1, **dadurch gekennzeichnet, dass** das Antriebsorgan (20) ein Rad (21) ist, das mit der äußeren Oberfläche der sphärischen Haube des Objekts in Kontakt gelangt, um sie rotatorisch anzutreiben, wobei die Drehachse des Rades am Ende eines Trägers (22) angebracht ist, der sich um eine andere Achse drehen kann, die durch den Kontaktpunkt des Rades an der äußeren Oberfläche des Objekts und durch das Zentrum der Sphäre, die durch den Abschnitt in Form einer sphärischen Haube des Objekts definiert ist, verläuft, derart, dass dem Objekt über das Rad in allen Richtungen eine Drehung auferlegt wird.

3. Positionierungsvorrichtung (2) nach Anspruch 2, **dadurch gekennzeichnet, dass** das Rad die Form einer Riemenscheibe hat, wobei in einer kreisförmigen Rinne der Riemenscheibe ein Gummireif vorgesehen ist.

4. Positionierungsvorrichtung (2) nach Anspruch 2, **dadurch gekennzeichnet, dass** am Träger in der Nähe des Rades des Antriebsorgans ein Druckluftmotor (23) angebracht ist, um das Rad um seine Drehachse rotatorisch anzutreiben.

5. Positionierungsvorrichtung (2) nach Anspruch 1, für die das Objekt ein sphärisches Objekt (3) ist, das auf den drei Abstützpunkten (P, P', P") angeordnet ist, **dadurch gekennzeichnet, dass** über dem späherischen Element und in Kontakt mit diesem ein zusätzliches Drucklager vorgesehen ist, um das Gewicht des sphärischen Elements auf den drei Abstützpunkten zu erhöhen.

6. Positionierungsvorrichtung (2) nach Anspruch 5, **dadurch gekennzeichnet, dass** das zusätzliche Drucklager eine Kugel umfasst, die in einem Druckluftrohr gleitet, um eine konstante Kraft auf das sphärische Element zu erzeugen.
